# EUROPÄISCHE PATENTANMELDUNG

(11) **EP 1 562 268 A1**
(43) Veröffentlichungstag der Anmeldung: **10.08.2005**
(21) Anmeldenummer: 04002700.5
(22) Anmeldetag: 06.02.2004
(51) Int. Cl.: H01R 31/06

(54) **Elektrisches Verbindungselement**

(71) Anmelder: SIEMENS AKTIENGESELLSCHAFT, 80333 München (DE)
(72) Erfinder: Kuschnarew, Christian, 97076 Würzburg (DE); Riem, Alexander, 97070 Würzburg (DE)

(57) **Zusammenfassung**

Die Erfindung betrifft ein Verbindungselement (1) zur Ausbildung elektrischer Verbindungen zwischen Komponenten (2, 3, 4) eines Systems. Um eine konstruktiv einfache Lösung zur Ausbildung einer elektrischen Verbindung zwischen diesen Komponenten (2, 3, 4) zu schaffen wird ein Verbindungselement (1) vorgeschlagen, das zum Zusammenwirken mit einem Trennelement (7) zur Trennung eines ersten Einbauraumes (5) von einem zweiten Einbauraum (6) ausgebildet ist und ein Stanzgitter (30, 31) zur Ausbildung einer elektrischen Verbindung zwischen wenigstens einer in dem ersten Einbauraum (5) angeordneten Systemkomponente (2) und wenigstens zwei in dem zweiten Einbauraum (6) angeordneten Systemkomponenten (3, 4) sowie eine die Einbauräume (5, 6) gegeneinander abdichtende Trennvorrichtung (27) umfasst.

## Beschreibung

Die Erfindung betrifft ein Verbindungselement zur Ausbildung elektrischer Verbindungen zwischen Komponenten eines Systems. Darüber hinaus betrifft die Erfindung eine Anordnung mit einem Verbindungselement zur Ausbildung einer elektrischen Verbindung zwischen Komponenten eines Systems.

Um die Aufwendungen für den Schutz elektrischer bzw. elektronischer Systemkomponenten zu minimieren, ist es häufig vorgesehen, einzelne Systemkomponenten in weniger belasteten Einbauräumen, beispielsweise dem Inneren eines Kraftfahrzeuges, anzuordnen, während andere Systemkomponenten funktionsbedingt in Einbauräumen mit erhöhten Belastungen, beispielsweise im Motorraum eines Kraftfahrzeuges, angeordnet sind. Durch die räumlich getrennte Anordnung von Systemkomponenten in unterschiedlichen Einbauräumen ist ein erhöhter Aufwand erforderlich, um eine elektrische Verbindung zwischen den Systemkomponenten herzustellen.

Aufgabe der vorliegenden Erfindung ist es, eine konstruktiv einfache Lösung zur Ausbildung einer elektrischen Verbindung zwischen Systemkomponenten zu schaffen. Diese Aufgabe wird durch ein Verbindungselement gemäß Anspruch 1 bzw. durch eine Anordnung gemäß Anspruch 9 gelöst.

Die Erfindung betrifft ein Verbindungselement, das zur Ausbildung einer elektrischen Verbindung zwischen Systemkomponenten dient. Eine Systemkomponente im Sinne der Erfindung ist dabei eine beliebige Vorrichtung oder ein Vorrichtungsteil, welches im Zusammenspiel mit einer anderen Vorrichtung oder einem anderem Vorrichtungsteil ein Gesamtsystem bildet. So sind beispielsweise ein Elektromotor, eine Motorsteuerung und eine Versorgungseinrichtung zur Versorgung der Motorsteuerung mit Spannung und Steuersignalen Systemkomponenten, die ein Antriebssystem bilden.

Das Verbindungselement ist zum Zusammenwirken mit einem Trennelement ausgebildet, das der Trennung eines ersten Einbauraumes von einem zweiten Einbauraum dient. Bei dem Trennelement kann es sich beispielsweise um die Gehäusewand einer der Systemkomponenten handeln. Das Verbindungselement ist mit anderen Worten dafür vorgesehen, mit einem zwischen den beiden Einbauräumen angeordneten Trennelement mechanisch verbunden zu werden. So kann das Verbindungselement beispielsweise in das Trennelement eingesetzt werden. Verbindungselement und Trennelement weisen zu diesem Zweck entsprechend ausgebildete Verbindungselemente auf.

Ein Grundgedanke der Erfindung ist es, ein Verbindungselement bereitzustellen, welches als integrales Bauteil sowohl zur Kontaktierung von Systemkomponenten in verschiedenen Einbauräumen dient, als auch eine Kontaktierung von Systemkomponenten innerhalb eines Einbauraumes ermöglicht. Insbesondere betrifft die Erfindung ein Verbindungselement mit einem Stanzgitter (leadframe) zur Ausbildung einer elektrischen Verbindung zwischen einer in dem ersten Einbauraum angeordneten ersten Systemkomponente und einer in dem zweiten Einbauraum angeordneten zweiten Systemkomponente einerseits und zwischen der zweiten Systemkomponente und einer in dem zweiten Einbauraum angeordneten dritten Systemkomponente andererseits. Der Grundgedanke ist jedoch hierauf nicht beschränkt. Vielmehr umfasst er beliebige Fälle, in denen Systemkomponenten in verschiedenen Einbauräumen miteinander elektrisch verbunden werden sollen. So sind beispielsweise auch Fälle umfasst, bei denen in den Einbauräumen jeweils mehrere, beispielsweise drei oder vier Systemkomponenten über das gemeinsame Verbindungselement kontaktiert werden.

Gemäß einem weiteren Grundgedanken der Erfindung weist das Verbindungselement eine die Einbauräume im Bereich des Verbindungselementes gegeneinander abdichtende Trennvorrichtung auf. Mit anderen Worten wird hierdurch die in dem Trennelement vorhandene, für die Herstellung der elektrischen Verbindung zwischen den in getrennten Einbauräumen angeordneten Systemkomponenten erforderliche Durchführöffnung oder dergleichen verschlossen. Somit ist es möglich, Systemkomponenten miteinander zu verbinden, die sich in Einbauräumen unterschiedlicher Beanspruchung befinden, beispielsweise in einem Innenraum eines Kraftfahrzeuges einerseits und in einem Raum mit Außenluft andererseits, ohne die Trennung der Einbauräume aufzuheben. Die Abdichtung der beiden Einbauräume gegeneinander kann dabei sehr unterschiedlich ausgeführt sein. In der vorliegenden Erfindung wird hierunter jedwede Trennung der beiden Einbauräume verstanden. Diese können mit anderen Worten beispielsweise luftdicht, wasserdicht, schalldicht oder dergleichen abgedichtet sein.

Durch die integrierte Bauform werden aufwändige mehrteilige Anschlusskonstruktionen vermieden. Darüber hinaus wird der zur elektrischen Kontaktierung der Systemkomponenten erforderliche Bauraum verringert. Zudem kann mit dem Einsatz des erfindungsgemäßen Verbindungselementes erreicht werden, dass ausschließlich diejenigen Systemkomponenten, welche funktionsbedingt in einem höher belasteten Einbauraum angeordnet sein müssen, auch in diesem angeordnet sind, während sämtliche anderen Systemkomponenten in einen Einbauraum mit geringeren Belastungen verlegt werden können, ohne dass sich der Aufwand für eine elektrische Verbindung der Systemkomponenten erhöht. Gleichzeitig verringert sich der Schutzaufwand für die nun nicht mehr den strengen Bedingungen ausgesetzten Systemkomponenten.

Vorteilhafte Ausgestaltungen der Erfindung sind in den Unteransprüchen beschrieben.

Besonders vorteilhaft ist es danach, wenn die Trennvorrichtung durch ein das Stanzgitter zumindest teilweise umgebendes Isoliermaterial gebildet wird. Hierbei wird die Tatsache genutzt, dass in Stanzgittertechnik ausgeführte Kontakte zu Schutzzwecken zumeist ohnehin von einem Isoliermaterial umgeben sind. Beispielsweise wird das Stanzgitter hierfür mit einem Kunststoffmaterial umspritzt. Dieses Umhüllen des Stanzgitters erfolgt nun erfindungsgemäß vorzugsweise derart, dass das Verbindungselement durch das Isoliermaterial in zwei gegeneinander abgedichtete Verbindungselementteilstücke unterteilt wird. Diese Verbindungselementteilstücke sind beim Zusammenwirken des Verbindungselementes mit dem die Einbauräume trennenden Trennelement derart angeordnet, dass sie eine sichere Abdichtung der beiden Einbauräume gewährleisten.

Ganz besonders vorteilhaft ist es, wenn das Verbindungselement mit wenigstens einer Systemkomponente eine Baueinheit bildet. Durch eine solche Integration wird der benötigte Einbauplatz weiter verringert und die Endmontage erleichtert. Zudem verringert sich die Anzahl der benötigten Kontaktierungs- bzw. Schutzelemente. Wird das zur Umhüllung des Stanzgitters verwendete Isoliermaterial zugleich dazu verwendet, eine mechanische Fixierung der Systemkomponente am Verbindungselement zu erreichen, können darüber hinaus aufwändige Verbindungselemente eingespart werden. Darüber hinaus ist es möglich, dieses Isoliermaterial zur Bildung eines gemeinsamen Gehäuses für Verbindungselement und Systemkomponente zu verwenden. Da dann das Verbindungselement und die Systemkomponente als eine einzige Baueinheit handhabbar sind, ergeben sich auch Vorteile bei der Montage.

Ganz besonders vorteilhaft ist es, wenn das Stanzgitter Anschlusskontakte aufweist, die als Steckkontakte ausgebildet sind. Das Isoliermaterial umgibt die Steckkontakte dabei vorzugsweise derart, dass es ein Steckergehäuse bildet. Hierbei spielt es keine Rolle, ob es sich bei den Steckkontakten um Buchsenkontakte oder Steckerkontakte handelt. Als Steckkontakte sind vorzugsweise diejenigen Anschlusskontakte des Stanzgitters ausgebildet, die zur Kontaktierung zweier Systemkomponenten in unterschiedlichen Einbauräumen vorgesehen sind. Hierdurch ergibt sich ein elektrischer Steckverbinder in Form eines Doppelsteckers, der in Stanzgittertechnik ausgeführt ist und zusätzlich einen integrierten Anschluss für eine weitere Systemkomponente aufweist.

Ganz besonders vorteilhaft ist es, wenn ein derart ausgebildetes Verbindungselement ein Steckeroberteil und ein Steckerunterteil aufweist derart, dass die Ausgestaltung des Steckeroberteils auf eine möglichst einfache Art und Weise an die besonderen Anforderungen des einzelnen Anwendungsfalles angepasst werden kann, während das stets gleich bleibende Steckerunterteil eine für die entsprechende Systemkomponente passende, normierte Steckverbindung vorsieht. Die Herstellung eines bestimmten Verbindungselementes wird dabei stark vereinfacht, wenn, im Sinne einer modularen Bauweise des Verbindungselementes, zwischen dem Steckeroberteil und dem Steckerunterteil eine das Stanzgitter aufnehmende Zwischenlage angeordnet ist. Vorzugsweise wird das als Trennelement zwischen den Einbauräumen dienende, das Stanzgitter umgebende Isoliermaterial als Zwischenlage verwendet. Steckeroberteil und Steckerunterteil bilden dann Verbindungselementteilstücke.

In einer weiteren Ausführungsform der Erfindung umfasst die mit dem Verbindungselement kombinierte Systemkomponente eine Leiterplatte mit gedruckten Leiterbahnen. In diesem Fall hat es sich für eine besonders sichere Kontaktierung als besonders vorteilhaft erwiesen, das Stanzgitter durch Einlöten, durch Einpressen oder dergleichen zu kontaktieren, mit anderen Worten also eine feste Verbindung herzustellen.

Wird das Stanzgitter verwendet, um die gedruckte Leiterbahn der Systemkomponente zu verstärken, kann die in der Systemkomponente verwendete Leiterplatte weniger aufwändig und damit preiswerter ausgestaltet sein. Werden beispielsweise diejenigen Bauteile der Systemkomponente, die hohe Ströme führen, ausschließlich über das Stanzgitter kontaktiert, kann die für die Leiterplatte verwendete Kupferdicke reduziert werden. Darüber hinaus ist es möglich, die gedruckten Leiterbahnen teilweise durch das Stanzgitter zu ersetzen. Mit anderen Worten dient das Stanzgitter dann als interne Leiterbahn für die Systemkomponente. Dadurch sind zum einen eine höhere elektrische Sicherheit und zum anderen eine Kostenersparnis verbunden.

In einer weiteren Ausführungsform der Erfindung werden Bauteile der Leiterplatte, die zur Kontaktierung der Leiterplatte normalerweise mit Anschlussdrähten versehen sind, in das Stanzgitter integriert. Anstelle einer Verdrahtung dieser Bauteile erfolgt also mit anderen Worten eine direkte Kontaktierung durch das Stanzgitter. Vorzugsweise erfolgt eine Integration sämtlicher schweren bzw. größeren Bauteile der Systemkomponente in das Stanzgitter des Verbindungselementes. Auf der mit dem Stanzgitter verbundenen Leiterplatte befinden sich dann nur noch oberflächenmontierte Bauteile.

Das Stanzgitter wird in einer weiteren Ausführungsform als alleiniger Schaltungsträger für eine Systemkomponente verwendet. Es nimmt dann sämtliche elektronischen Bauelemente, Schalter etc. dieser Systemkomponente auf. Somit ergibt sich ein kompaktes Verbindungselement mit der integrierten Funktionalität einer Systemkomponente.

Den oben beschriebenen Ausführungsformen liegt die gemeinsame Idee zugrunde, ein umspritztes Stanzgitter gleichzeitig als, Gehäuse, Stecker, Verdrahtung und/oder Träger für elektronische Bauelemente zu verwenden und damit den herkömmlichen Aufbau aus Gehäuse, Leiterplatte, Kabelbaum und Stecker in der einen oder anderen Form zu ersetzen.

Gemäß einer weiteren Ausführungsform der Erfindung sind Bauteile einer Systemkomponente wärmeleitend mit dem Stanzgitter verbunden. Mit anderen Worten dient das Stanzgitter als Kühlkörper für diese Bauteile. So kann das Stanzgitter zur Kontaktierung beispielsweise eines in einer Systemkomponente angeordneten Transistors und durch eine entsprechende geometrische Ausgestaltung, etwa eine Verbreiterung, zugleich als dessen Kühlkörper dienen. Das Stanzgitter ist in einer weiteren Ausführungsform derart ausgestaltet, dass es nicht nur für einzelne Bauteile, sondern für eine angeschlossene Systemkomponente als ganzes als Kühlkörper dient.

Die mit der elektromagnetischen Verträglichkeit(EMV) verbundenen Eigenschaften des Verbindungselementes werden in einer weiteren Ausführungsform der Erfindung durch eine geeignete Variation der Leitergeometrie optimiert. Es ist insbesondere von Vorteil, wenn eine der durch das Stanzgitter gebildeten Leitungen als Schirmung ausgebildet ist, derart, dass sie die anderen Leitungen umhüllt. Eine weitere Möglichkeit zur Optimierung der EMV-Eigenschaften des Verbindungselementes ist die Anordnung von diskreten Bauelementen, beispielsweise Ferriten oder Kondensatoren, auf dem Stanzgitter. Hierdurch können insbesondere Hochfrequenzauskopplungen aus Systemkomponenten verhindert werden.

Gemäß einer weiteren Ausführungsform der Erfindung sind auf dem Stanzgitter diskrete Bauelemente zur Schutzbeschaltung wenigstens einer der Systemkomponenten vorgesehen. Aufgrund der genauen Kenntnis von Konstruktion und Materialeigenschaften des Stanzgitters ist es zudem möglich, die Erfassung eines Spannungsabfalls auf einem Teil des Stanzgitters zur Strommessung zu nutzen. Hierdurch kann auf die Verwendung von diskreten Messwiderständen verzichtet werden.

Ganz besonders vorteilhaft ist die Verwendung des erfindungsgemäßen Verbindungselementes in einer Anordnung, bei der die erste Systemkomponente ein Elektromotor, die zweite Systemkomponente eine Motorsteuerung und die dritte Systemkomponente ein Versorgungselement, beispielsweise der Kabelbaum in einem Kraftfahrzeug ist. Handelt es sich beispielsweise bei dem Elektromotor um einen Gebläsemotor für eine Klimaanlage bzw. eine Heizung in einem Kraftfahrzeug, so kann der mit dem Lüfterrad verbundene Elektromotor in einem Einbauraum mit Außenluft, beispielsweise dem Motorraum des Kraftfahrzeuges, angeordnet sein, während die Ansteuerelektronik für diesen Motor in den weniger durch Umwelteinflüsse belasteten Innenraum des Kraftfahrzeugs verlegt ist. Dabei erfolgt der Anschluss der Ansteuerelektronik an externe Geräte, hier also einen die Betriebsspannung und eventuelle Steuersignale bereitstellenden Kabelbaum, ebenfalls im Innenraum. Die Verwendung von getrennten Steckern für den Anschluss des Motors an die Ansteuerelektronik einerseits und den Anschluss des Kabelbaums an die Ansteuerelektronik andererseits ist nicht mehr erforderlich. In einer bevorzugten Ausführungsform der Erfindung wird stattdessen ein als Doppelstecker ausgebildetes Verbindungselement als Durchführung durch die Trennwand des Motorgehäuses verwendet. Eine aus der Kunststoffumspritzung des die Anschlusskontakte bildenden Stanzgitters gebildete Trennvorrichtung dichtet dabei den äußeren Einbauraum, in dem sich der Elektromotor befindet, von dem inneren Einbauraum, der die Ansteuerelektronik und den Kabelbaum aufnimmt, im Bereich des Doppelsteckers ab.

Die vorliegende Erfindung wird nachfolgend anhand von Ausführungsbeispielen beschrieben, die mit Hilfe von Zeichnungen näher erläutert werden. Hierbei zeigen:
- FIG 1: eine vereinfachte Darstellung des Verbindungselementes sowie der drei Systemkomponenten in Explosionsdarstellung,
- FIG 2: eine perspektivische Ansicht des Verbindungselementes mit durchsichtigen Außenwänden,
- FIG 3: eine Ausführung des Stanzgitters mit gegabelter Masseschiene,
- FIG 4: eine Ausführung des Stanzgitters mit umhüllender Masseschiene, und
- FIG 5: eine vereinfachte Darstellung eines mit einer Leiterplatte der Motorsteuerung verbundenen Stanzgitters.

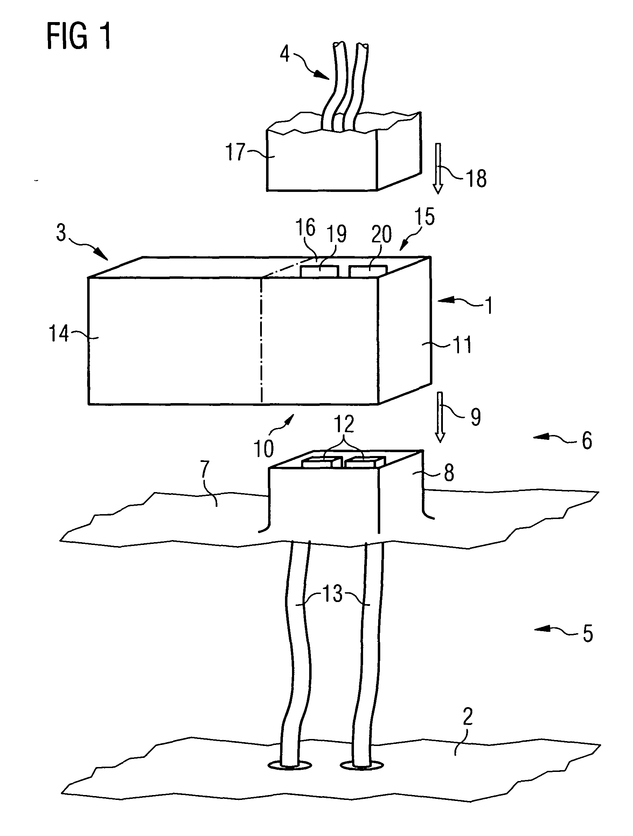

FIG 1 zeigt in einer stark vereinfachten Darstellung eine Anordnung mehrerer, ein Antriebssystem bildender Systemkomponenten mit einem erfindungsgemäßen Verbindungselement 1 zur Ausbildung einer elektrischen Verbindung der Systemkomponenten. Hierbei handelt es sich um einen elektrischen Motor 2 eines Lüftergebläses, eine Motorsteuerung 3 sowie ein Versorgungselement zur Versorgung der Motorsteuerung mit Spannung in Form eines Kabelbaumes 4.

Der Motor 2 befindet sich dabei in einem ersten Einbauraum, nämlich dem Motorraum 5 eines Kraftfahrzeuges, während sich die Motorsteuerung 3 und der Kabelbaum 4 in einem zweiten Einbauraum, nämlich dem Innenraum 6 des Kraftfahrzeuges befinden. Motorraum 5 und Innenraum 6 sind durch ein Trennelement voneinander getrennt, welches im vorliegenden Fall durch das Motorgehäuse 7 gebildet wird.

Das Motorgehäuse 7 weist eine in Richtung Innenraum 6 zeigende Auskragung 8 auf, auf die das Verbindungselement 1 in Steckrichtung 9 aufgesteckt werden kann. Die offene Unterseite 10 des Verbindungselementgehäuses 11 umfasst mit anderen Worten im Montageendzustand die Auskragung 8 und dichtet die Verbindungsstelle mehr oder weniger ab. Soll die Abdichtung verbessert werden, kann in einer dafür vorgesehenen umlaufenden Aufnahmenut im Inneren des Verbindungselementgehäuses 11 und/oder am Umfang der Auskragung 8 ein Dichtungsring (nicht abgebildet) angebracht sein.

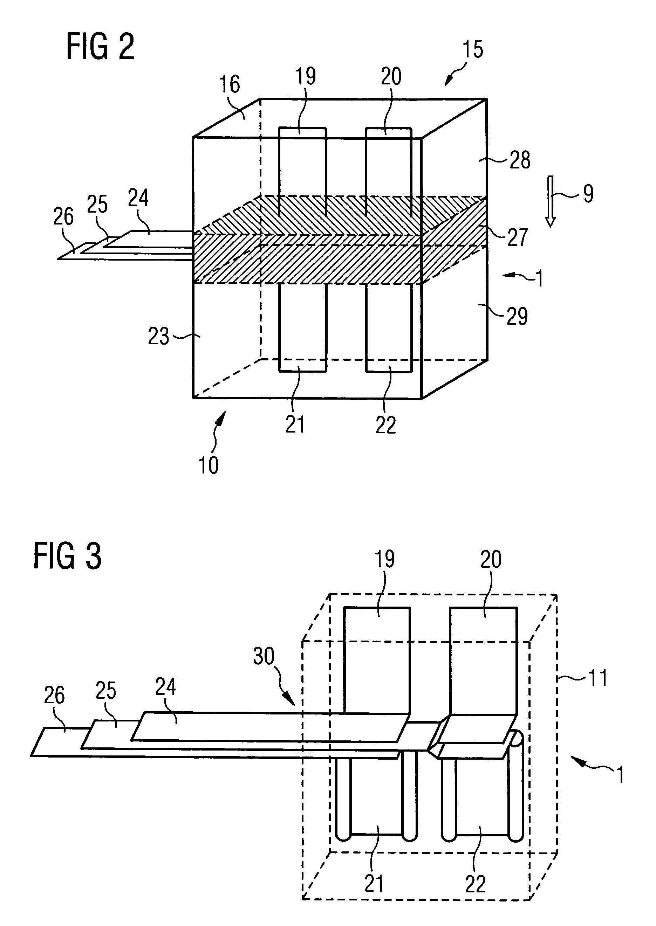

In der Auskragung 8 befinden sich elektrische Steckkontakte 12, die unter Verwendung von Verbindungskabeln 13 mit dem Motor 2 verbunden sind. Selbstverständlich ist die Kontaktierung des Motors auch auf andere Art und Weise möglich, beispielsweise mittels einer Verschienung. Die Steckkontakte 12 sind im Montageendzustand mit in dem Verbindungselement 1 angeordneten Steckkontakten 21, 22 (vgl. FIG 2) verbunden.

Unmittelbar benachbart zu dem Verbindungselement 1 angeordnet befindet sich die Motorsteuerung 3. Dabei sind Verbindungselementgehäuse 11 und Motorsteuerungsgehäuse 14 als ein gemeinsames Gehäuseteil ausgebildet. In dem Motorsteuerungsgehäuse 14 ist die Motorsteuerung 3 unter Verwendung von Rastoder Schnappverbindungen fixiert.

Die Oberseite 15 des Verbindungselementgehäuses 11 ist ebenfalls mit einer Öffnung 16 versehen, die als Aufnahmeöffnung für einen am Kabelbaum 4 angebrachten Steckverbinder 17 dient. Zur Kontaktierung wird der Steckverbinder 17 in Steckrichtung 18 auf das Verbindungselement 1 aufgesteckt. Die in dem Steckverbinder 17 angeordneten Steckkontakte (nicht abgebildet) sind im Montageendzustand mit in dem Verbindungselement 1 angeordneten weiteren Steckkontakten 19, 20 verbunden.

Im montierten Zustand wird die Motorsteuerung 3 über den Kabelbaum 4 mit Betriebsspannung versorgt. Gleichzeitig werden Steuersignale von dem Kabelbaum 4 zu der Motorsteuerung 3 übertragen. Der Motor 2 wird über die Motorsteuerung 3 mit einer Betriebsspannung versorgt, die den Steuersignalen entspricht. Zur elektrischen Verbindung dient allein das erfindungsgemäße Verbindungselement 1.

FIG 2 zeigt das Verbindungselement 1 ohne die Systemkomponenten. Sämtliche Anschlusskontakte des Verbindungselementes 1 sind in Stanzgittertechnik ausgeführt. Dies gilt zum einen für die im Verbindungselementgehäuse 11 angeordneten, in Richtung Gehäuseoberseite 15 weisenden Anschlusskontakte 19, 20 in Form von Flachsteckern als auch für die gleichfalls im Verbindungselementgehäuse 11 angeordneten, jedoch in Richtung Gehäuseunterseite 10 weisenden Anschlusskontakte 21, 22, die ebenfalls als Flachstecker ausgebildet sind. Diese Steckkontakte 19, 20, 21, 22 dienen zum Anschluss von Kabelbaum 4 einerseits und Motor 2 andererseits an das Verbindungselement 1. Aus einer Längsseite 23 des Verbindungselementgehäuses 11 treten zudem Anschlusskontakte 24, 25, 26 zum Anschluss der Motorsteuerung 3 heraus. Die Anschlusskontakte 24, 25, 26 sind dabei so ausgeformt, dass sie sich einfach mit einer Leiterplatte 33 (vgl. FIG 5) der Motorsteuerung 3 verbinden lassen. Im vorliegenden Beispiel weisen sie eine Schienenform auf. Die Anschlusskontakte 24, 25, 26 des Verbindungselementes 1 können jedoch auch als Löt- oder Einpressstifte ausgebildet sein (nicht abgebildet).

Das die sämtlichen Kontakte 19, 20, 21, 22, 23, 24, 25, 26 ausbildende, vorzugsweise aus Bandmaterial gestanzte Stanzgitter 30, 31 (vgl. FIG 3) ist innerhalb des Verbindungselementes 1 von einem Kunststoffmaterial blockförmig umspritzt derart, dass in etwa mittig im Verbindungselementgehäuse 11 ein Trennblock 27 angeordnet ist, der die Einbauräume 5, 6 im Bereich des Verbindungselementes 1 gegeneinander abdichtet. Durch diesen Trennblock 27 wird das Verbindungselement 1 in zwei gegeneinander luftdicht abgeschlossene Verbindungselementteilstücke 28, 29 unterteilt.

Die Herstellung eines solchen Verbindungselementes 1 wird dadurch vereinfacht, dass das Kunststoffmaterial zur Umspritzung des Stanzgitters 30, 31 und zur Formung des Trennblockes 27 zugleich zur Bildung des Verbindungselementgehäuses 11 dient. Mit anderen Worten wird vorzugsweise sowohl die Formung des Verbindungselementgehäuses 11 als auch das Umspritzen des Stanzgitters 30, 31 zur Schaffung des Trennblockes 27 in einem einzigen oder in unmittelbar aneinander anschließenden Arbeitsgängen ausgeführt.

In einem weiteren Ausführungsbeispiel der Erfindung wird bei dem Umhüllen des Stanzgitters 30, 31 mit Kunststoffmaterial derart vorgegangen, dass zugleich ein gemeinsames Gehäuse für Verbindungselement 1 und Motorsteuerung 3 geformt wird, so dass Verbindungselement 1 und Motorsteuerung 3 als eine einzige Baueinheit handhabbar sind, wie in FIG 1 abgebildet.

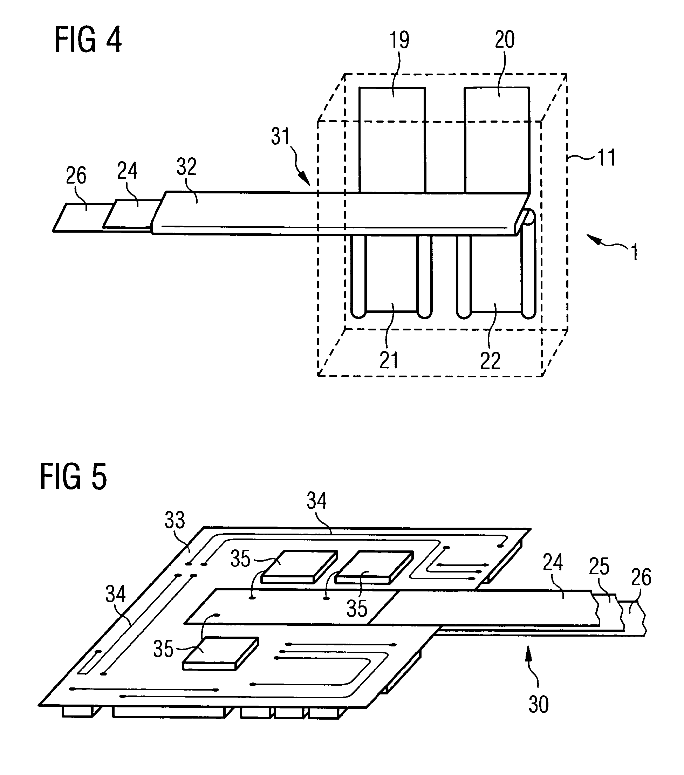

Die FIG 3 und 4 zeigen verschiedene Ausführungen eines Stanzgitters 30, 31. Bei der in FIG 3 dargestellten Variante ist ein Stanzgitter 30 mit einer endseitig gegabelten Kontaktschiene als Masseschiene 25 vorgesehen, die sowohl mit dem ersten motorseitigen Steckkontakt 22 als auch mit dem ersten kabelbaumseitigen Steckkontakt 20 einstückig verbunden ist. Oberhalb und unterhalb der seitlich in Richtung Motorsteuerung 3 aus dem Verbindungselementgehäuse 11 herausgeführten Masseschiene 25 verläuft jeweils eine weitere Kontaktschiene 24, 26, die einstückig mit dem zweiten motorseitigen Steckkontakt 21 (Motoranschluss plus) bzw. mit dem zweiten kabelbaumseitigen Steckkontakt 19 (Batterieanschluss plus) verbunden ist.

Bei der in FIG 4 dargestellten Variante ist die Leitergeometrie des Stanzgitters 31 zugunsten verbesserter EMV-Eigenschaften des Verbindungselementes 1 abgeändert. Dabei ist die Masseschiene 32 dienende Kontaktschiene als Schirmung ausgebildet derart, dass sie die anderen Kontaktschienen 24, 26 umhüllt.

Grundsätzlich kann das Stanzgitter 30, 31 auch weitere Anschlusskontakte ausbilden, beispielsweise Anschlusskontakte für weitere Systemkomponenten, Geräten der Fahrzeugelektrik oder anderen Anschlüssen des Kabelbaumes 4. Neben den in FIG 2, 3 und 4 abgebildeten Steckkontakten 19, 20, 21, 22 und Anschlusskontakten 24, 25, 26, 32 können insbesondere Steuerkontakte (nicht abgebildet) vorgesehen sein, welche ebenfalls in Stanzgittertechnik ausgebildet sind. Diese Steuerkontakte dienen beispielsweise der Übertragung von Steuersignalen vom Kabelbaum 4 zu der Motorssteuerung 3. Sie erstrecken sich vorzugsweise parallel zu den Steckkontakten 19, 20 aus dem Trennblock 27 in Richtung Steckverbinder 17, welcher zur Kontaktierung der Steuerkontakte entsprechende Gegenkontakte aufweist. Die Steuerkontakte verlassen den Trennblock 27 vorzugsweise parallel zu den Anschlusskontakten 24, 25, 26, 32, beispielsweise in Form von Signalschienen, die zum einen eine Hinleitung zur Übertragung von Steuersignalen zu der Motorsteuerung 3 und zum anderen eine von der Motorsteuerung 3 kommende Rückleitung ausbilden.

FIG 5 zeigt schließlich ein weiteres Ausführungsbeispiel der Erfindung, bei dem die Motorsteuerung 3 eine auf einer Leiterplatte 33 mit gedruckten Leiterbahnen 34 angeordnete Steuerelektronik aufweist und Kontaktschienen 24, 25, 26 des Verbindungselementes 1 durch Einlöten mit der Leiterplatte 33 der Motorsteuerung 3 verbunden sind. Dabei dient das Stanzgitter 30 als Leiterbahn für die Motorsteuerung 3. Mit anderen Worten werden auf der Leiterplatte 33 angeordnete elektronische Bauteile 35 über das Stanzgitter 30 kontaktiert.

In einem weiteren, nicht abgebildeten Ausführungsbeispiel der Erfindung sind die Anschlusskontakte 24, 25, 26 als senkrecht oder quer auf die Leiterplatte 33 zulaufende Kontaktstifte ausgebildet, die an ihren Kontaktenden Nasen zum Einlöten aufweisen.

## Patentansprüche

1. Verbindungselement (1), ausgebildet zum Zusammenwirken mit einem Trennelement (7), insbesondere einer Gehäusewand od. dgl., zur Trennung eines ersten Einbauraumes (5) von einem zweiten Einbauraum (6),
- mit einem Stanzgitter (30, 31) zur Ausbildung einer elektrischen Verbindung zwischen wenigstens einer in dem ersten Einbauraum (5) angeordneten Systemkomponente (2) und wenigstens zwei in dem zweiten Einbauraum (6) angeordneten Systemkomponenten (3, 4), und
- mit einer die Einbauräume (5, 6) gegeneinander abdichtenden Trennvorrichtung (27).

2. Verbindungselement (1) nach Anspruch 1, **dadurch gekennzeichnet, dass** die Trennvorrichtung (27) durch ein das Stanzgitter (30, 31) zumindest teilweise umgebendes Umhüllungsmaterial gebildet wird.

3. Verbindungselement (1) nach Anspruch 1 oder 2, **dadurch gekennzeichnet, dass** es mit einer Systemkomponente (3) eine bauliche Einheit bildet.

4. Verbindungselement (1) nach einem der Ansprüche 1 bis 3, **dadurch gekennzeichnet, dass** das Stanzgitter (30, 31) Anschlusskontakte (19, 20, 21, 22) aufweist, die zur Kontaktierung wenigstens einer Systemkomponente (2, 4) als Steckkontakte ausgebildet sind.

5. Verbindungselement (1) nach einem der Ansprüche 1 bis 4, **dadurch gekennzeichnet, dass** eine Systemkomponente (3) eine gedruckte Leiterbahn (34) aufweist und das Stanzgitter (30, 31) mit der Leiterbahn (34) fest verbunden ist.

6. Verbindungselement (1) nach einem der Ansprüche 1 bis 5, **dadurch gekennzeichnet, dass** eine Systemkomponente (3) eine gedruckte Leiterbahn (34) aufweist und das Stanzgitter (30, 31) die Leiterbahn (34) verstärkt.

7. Verbindungselement (1) nach einem der Ansprüche 1 bis 6, **dadurch gekennzeichnet, dass** das Stanzgitter (30, 31) als Leiterbahn für eine Systemkomponente (3) dient.

8. Verbindungselement (1) nach einem der Ansprüche 1 bis 7, **dadurch gekennzeichnet, dass** das Stanzgitter (30, 31) zur direkten Kontaktierung von Bauteilen (35) einer Systemkomponente (3) dient.

9. Anordnung
- mit wenigstens einer in einem ersten Einbauraum (5) angeordneten Systemkomponente (2),
- mit wenigsten zwei in einem zweiten Einbauraum (6) angeordneten Systemkomponenten (3, 4),
- mit einem Trennelement (7), insbesondere einer Gehäusewand od. dgl., zur Trennung des ersten Einbauraumes (5) von dem zweiten Einbauraum (6),
- mit einem zum Zusammenwirken mit dem Trennelement (7) ausgebildeten Verbindungselement (1) mit einem Stanzgitter (30, 31) zur Ausbildung einer elektrischen Verbindung zwischen der wenigstens einen in dem ersten Einbauraum (5) angeordneten Systemkomponente (2) und den wenigstens zwei in dem zweiten Einbauraum (6) angeordneten Systemkomponenten (3, 4) und mit einer die Einbauräume (5, 6) gegeneinander abdichtenden Trennvorrichtung (27).

10. Anordnung nach Anspruch 9,
- mit einem Elektromotor als erster Systemkomponente (2),
- mit einer Motorsteuerung als zweiter Systemkomponente (3), und
- mit einem Versorgungselement, insbesondere einem Kabelbaum od. dgl., als dritter Systemkomponente (4).
